# EUROPÄISCHE PATENTANMELDUNG

(11) **EP 4 102 099 A1**
(43) Veröffentlichungstag der Anmeldung: **14.12.2022**
(21) Anmeldenummer: 22176369.1
(22) Anmeldetag: 31.05.2022
(51) Int. Cl.: F16F 13/14, F16F 13/26, F16F 13/28

(54) **HYDROBUCHSE**

(30) Priorität: 07.06.2021 DE 102021114551
(71) Anmelder: Trelleborg Antivibration Solutions Germany GmbH, 16727 Velten (DE)
(72) Erfinder: Dunda, Martin, 13187 Berlin (DE); Cordts, Detlef, 16348 Wandlitz (DE)
(74) Vertreter: Reiser & Partner Patentanwälte mbB

(57) **Zusammenfassung**

Hydrobuchse (1), umfassend ein hülsenförmiges Gehäuse (2), welches einen Innenkörper (3) mit radialem Abstand umgibt, wobei das Gehäuse (2) und der Innenkörper (3) über einen Federkörper (4) miteinander wirkverbunden sind, wobei der Federköper (4) so ausgebildet ist, dass sich zwischen Gehäuse (2) und Innenkörper (3) zwei Kammern (5, 6) ausbilden, welche eine Hydraulikflüssigkeit aufnehmen, wobei die Kammern (5, 6) über zumindest eine Einrichtung (7) hydraulisch miteinander verbunden sind, wobei die Einrichtung (7) aktive Steuerungsmittel (8) umfasst, wobei die Einrichtung (7) zumindest teilweise in den Innenkörper (3) aufgenommen ist.

## Beschreibung

Die Erfindung betrifft eine Hydrobuchse, umfassend ein hülsenförmiges Gehäuse, welches einen Innenkörper mit radialem Abstand umgibt, wobei Gehäuse und Innenkörper über einen Federkörper miteinander wirkverbunden sind, wobei der Federkörper so ausgebildet ist, dass sich zwischen Gehäuse und Innenkörper zwei Kammern ausbilden, welche eine Hydraulikflüssigkeit aufnehmen, wobei die Kammern über zumindest eine Einrichtung hydraulisch miteinander verbunden sind, wobei die Einrichtung aktive Steuerungsmittel umfasst.

Eine derartige Hydrobuchse ist aus der EP 3 117 120 B1 bekannt. Derartige Hydrobuchsen kommen in Schienenfahrzeugen im Bereich des Drehgestells zum Einsatz. Dort werden Hydrobuchsen zwischen Radsatz und Drehgestell eingesetzt, wobei die Hydrobuchse in der zwischen Radsatz und Drehgestell angeordneten Primärfederung angeordnet ist und zusammen mit den anderen Komponenten ein schwingungstechnisches System bildet.

Die mit Hydraulikflüssigkeit befüllte Hydrobuchse ermöglicht dabei eine Isolierung oder Dämpfung der von dem Radsatz in das Drehgestell eingebrachten Schwingungen. Die aktiven Steuerungsmittel ermöglichen eine aktive Verlagerung des Innenkörpers relativ zu dem Gehäuse. Die Einbindung aktiver Steuerungsmittel ist besonders einfach, wenn die Steuerungsmittel außerhalb der Hydrobuchse angeordnet sind. Dies geht jedoch mit einem erhöhten Bauraumbedarf einher.

Der Erfindung liegt die Aufgabe zugrunde, eine Hydrobuchse bereitzustellen, welche einen geringeren Bauraumbedarf aufweist.

Diese Aufgabe wird mit den Merkmalen von Anspruch 1 gelöst. Auf vorteilhafte Ausgestaltungen nehmen die Unteransprüche Bezug.

Die erfindungsgemäße Hydrobuchse umfasst ein hülsenförmiges Gehäuse, welches einen Innenkörper mit radialem Abstand umgibt, wobei Gehäuse und Innenkörper über einen Federkörper miteinander wirkverbunden sind, wobei der Federkörper so ausgebildet ist, dass sich zwischen Gehäuse und Innenkörper zwei Kammern ausbilden, welche eine Hydraulikflüssigkeit aufnehmen, wobei die Kammern über zumindest eine Einrichtung hydraulisch miteinander verbunden sind, wobei die Einreichung aktive Steuerungsmittel umfasst, wobei die Einrichtung zumindest teilweise in den Innenkörper aufgenommen ist.

Durch die zumindest teilweise Integration der Einrichtung in den Innenkörper reduziert sich der Bauraumbedarf der Hydrobuchse. Gleichzeitig kann eine Hydrobuchse bereitgestellt werden, deren Charakteristik auch während des Betriebs durch die aktiven Steuerungsmittel anpassbar ist. Wenn die Einrichtung vollständig in dem Innenkörper aufgenommen ist, ergibt sich darüber hinaus der Vorteil, dass die Hydrobuchse besonders robust gegenüber äußeren Einwirkungen ist und externe Anbindungen, beispielsweise für Hydraulikleitungen, entfallen können.

Vorzugsweise bewirkt die Einrichtung eine aktive Verlagerung des Innenkörpers relativ zu dem Gehäuse. Dadurch kann die Lage des Gehäuses relativ zum Innenkörper aktiv beeinflusst werden. Insbesondere bei Anwendungen bei Schienenfahrzeugen ergibt sich durch eine aktive Verlagerung ein verbesserter, insbesondere verschleiß- und geräuscharmer Kurvenlauf.

Die aktiven Steuerungsmittel können als Ventil ausgebildet sein. Ein Ventil stellt eine besonders einfache Möglichkeit dar, die Verlagerung von Hydraulikflüssigkeit in die beiden Kammern zu beeinflussen und zu modifizieren. Dabei ist der Einsatz verschiedener Ventiltechnologien denkbar. Bei Kolbenschieberventilen ist vorteilhaft, dass die Betätigungskräfte gering sind. Bei Proportionalventilen ist es möglich, einen stetigen Übergang der Ventilöffnung zwischen der geöffneten und geschlossenen Position zu realisieren. Proportionalventile ermöglichen beispielsweise ein langsameres Befüllen der Kammern. Wegeventile ermöglichen je nach Ausgestaltung und Wahl der Schaltstellung eine Änderung der Durchflusswege der Hydraulikflüssigkeit.

Je nach Schaltstellung beeinflusst das Ventil als aktives Steuerungsmittel das Verhalten der Hydrobuchse. Dies gilt insbesondere dann, wenn die Einrichtung neben aktiven Steuerungsmittel auch eine Fördereinrichtung umfasst, welche ausgerüstet ist, die Hydraulikflüssigkeit zu fördern. Die Fördereinrichtung kann dabei, je nach Stellung des Ventils, Hydraulikflüssigkeit in eine der beiden Kammern oder auch in beide Kammern aktiv fördern.

Des Weiteren kann die Einrichtung einen Speicher aufweisen, welcher geeignet ist, Hydraulikflüssigkeit aufzunehmen. Der Speicher ist insbesondere dann vorteilhaft, wenn die Fördereinrichtung keine Hydraulikflüssigkeit in eine der beiden Kammern fördern kann. Darüber hinaus ist es möglich, eine kostengünstige Pumpe mit besonders geringer Pumpleistung auszuwählen. Diese pumpt Hydraulikflüssigkeit in den Speicher bis dieser gefüllt ist, anschließend wird die Pumpe abgeschaltet. Dabei ist vorteilhaft, dass die Pumpe nicht nur kurzzeitig zum Befüllen einer Kammer läuft, sondern eine längere Zeit zum Befüllen des Speichers. Das Befüllen der Kammern erfolgt dann mit der in dem Speicher bevorrateten Hydraulikflüssigkeit. Der Speicher kann als gasgefüllter Druckspeicher ausgebildet sein. Die Füllmenge je Kammer ist vergleichsweise gering. Durch den Speicher kann somit auch ein stoßweiser Betrieb der Pumpe vermieden werden.

Vorzugsweise ist das aktive Steuerungsmittel in den Innenkörper integriert. Bei dieser Ausgestaltung sind die weiteren Komponenten der Einrichtung, wie Fördereinrichtung und Speicher, außerhalb der Hydrobuchse angeordnet. Dies ist insbesondere dann vorteilhaft, wenn Fördereinrichtung und Speicher aufgrund der Förder- und Speicherkapazität eine gewisse Baugröße aufweisen. Bei besonders kompakten Ausgestaltungen ist es aber prinzipiell auch denkbar, dass neben dem aktiven Steuerungsmittel zumindest auch die Fördereinrichtung in den Innenkörper aufgenommen ist. Dabei können auch die Sensoren und die Steuerungseinheit in den Innenkörper integriert sein. Dadurch können Leitungsführungen für Daten und elektrischen Strom zumindest reduziert werden.

Gemäß einer vorteilhaften Ausgestaltung ist das Ventil ausgebildet, verschiedene Schaltpositionen einzunehmen.

In einer ersten Position, welches beispielsweise eine Mittelposition eines Kolbenschieberventils sein kann, erfolgt keine Förderung von Hydraulikflüssigkeit von der Fördereinrichtung in eine der beiden Kammern. Bei dieser Ausgestaltung kann zwischen den beiden Kammern ein Kanal freigegeben sein, durch den Hydraulikflüssigkeit zwischen den beiden Kammern strömen kann. Dadurch kann sich der Innenkörper relativ zu dem Gehäuse verlagern und die Hydrobuchse hat bei niederfrequenten Anregungen eine weiche Charakteristik. Dies gilt sowohl bei Geradeausfahrt als auch bei Kurvenfahrt. Diese Eigenschaft verbessert beispielsweise die Laufruhe bei Geradeausfahrt. Bei höherfrequenten Anregungen hat die Hydrobuchse hingegen vorzugsweise eine harte Charakteristik.

Darüber hinaus ist denkbar, dass die beiden Kammern über einen Bypass-Kanal mit kleinem Querschnitt strömungsleitend verbunden sind. Der Querschnitt des Bypass-Kanal ist dabei deutlich geringer als der Querschnitt des Kanals. Des Weiteren verbindet der Bypass-Kanal die beiden Kammern direkt miteinander. Dabei bildet der Bypass-Kanal eine Sicherungseinrichtung (Fail-Safe-Kanal) und ermöglicht einen Austausch von Hydraulikflüssigkeit auch dann, wenn die aktive Einrichtung aufgrund einer Störung oder dergleichen nicht ordnungsgemäß funktioniert. In diesem Fall strömt die Hydraulikflüssigkeit langsam durch den Bypass-Kanal und bewirkt eine allmähliche Rückstellung des Hydrolagers. Dadurch kann verhindert werden, dass das Hydrolager bei einer Störung in einer ausgelenkten Position verharrt. Durch den kleinen Querschnitt erfolgt der Ausgleich aber so langsam, dass das gewünschte Auslenken bei einem Regelbetrieb nicht beeinträchtigt ist. Prinzipiell ist dabei denkbar, dass die beiden Kammern lediglich über den Bypass-Kanal miteinander verbunden sind. Vorzugsweise ist der Bypass-Kanal aber zusätzlich zu dem Kanal vorgesehen.

In einer zweiten Position des Ventils kann eine strömungsleitende Verbindung zwischen der ersten Kammer, der Fördereinrichtung und/oder dem Speicher gegeben sein. In einer dritten Position des Ventils kann eine strömungsleitende Verbindung zwischen der zweiten Kammer, der Fördereinrichtung und/oder dem Speicher gegeben sein. Bei diesen beiden Positionen wird über die Fördereinrichtung Hydraulikflüssigkeit in die erste Kammer, beziehungsweise in die zweite Kammer gefördert. Aus der jeweils anderen Kammer strömt die Hydraulikflüssigkeit ab. Dies bewirkt eine Verlagerung des Innenkörpers relativ zu dem Gehäuse, so dass die Hydrobuchse insgesamt aktiv ausgelenkt wird. Diese aktive Auslenkung der Hydrobuchse durch Förderung von Hydraulikflüssigkeit in eine der beiden Kammern ist bei Kurvenfahrten vorteilhaft. Die aktive Auslenkung erhöht den Komfort und verringert den Verschleiß. Darüber hinaus kann durch eine gezielte Verlagerung des Hydrolagers ein gezielter Verschleiß an Bestandteilen des Radsatzes erzeugt werden. Dies ist vorteilhaft, um einem zuvor aufgetretenen einseitigen Verschleiß entgegenzuwirken.

Die Einrichtung umfasst vorzugsweise zumindest einen Sensor für die Erfassung einer Kurvenfahrt und eine Steuerungseinrichtung. Dabei kann ein erster Sensor vorgesehen sein, der die Verlagerung des Innenkörpers relativ zu dem Gehäuse erfasst. Besonders bevorzugt ist der erste Sensor für die Erfassung einer Kurvenfahrt als Wegesensor ausgebildet. Ein vorteilhafter Wegesensor ist dabei ein Hall-Sensor oder ein induktiver Sensor. Wegesensoren, insbesondere Hall-Sensoren oder induktive Sensoren, können in der Hydrobuchse aufgenommen sein. Besonders vorteilhaft ist es, wenn der Sensor dem Gehäuse und/oder dem Innenkörper zugeordnet ist. Bei dieser Ausgestaltung erfasst der Sensor Relativverlagerungen des Innenkörpers relativ zu dem Gehäuse. Ist die Hydrobuchse Teil eines Drehgestells eines Schienenfahrzeugs, kann je nach Amplitude und Dauer der Auslenkung eine Kurvenfahrt ermittelt werden. Dadurch, dass der Sensor in die Hydrobuchse integriert ist, ist der Sensor besonders gut vor äußeren Einflüssen geschützt und es reduziert sich die Erfordernis für äußere Leitungsführungen.

Es kann ein zweiter Sensor vorgesehen sein, der den Schienenverlauf direkt erfasst. Der zweite Sensor ist dementsprechend eingerichtet, eine Kurvenfahrt eines Schienenfahrzeugs zu erfassen. Darüber hinaus ist denkbar, dass der zweite Sensor auch den Radius der Kurvenfahrt erfasst. Ein vorteilhafter Sensor hierfür ist beispielsweise ein Beschleunigungssensor, der die Querbeschleunigung des Drehgestells erfasst, an welchem die Hydrobuchse montiert ist. Bei Geradeausfahrt erfasst der Sensor eine bei einem für Geradeausfahrt typischen Sinuslauf auftretende Querbeschleunigung. Die Steuerungseinrichtung bewirkt in diesem Fall, dass das Ventil beispielsweise in der Mittelstellung gehalten ist und Hydraulikflüssigkeit zwischen den beiden Kammern ausgetauscht werden kann. Übersteigt die Querbeschleunigung einen Schwellwert, deutet dies auf eine Kurvenfahrt hin und die Steuerungseinrichtung kann eine Verlagerung des aktiven Steuerungsmittel veranlassen, wobei je nach Kurvenrichtung eine Förderung von Hydraulikflüssigkeit in die erste oder in die zweite Kammer erfolgt und sich der Innenkörper relativ zu dem Gehäuse verlagert. Dabei kann der Sensor eingerichtet sein, nicht nur eine Kurvenfahrt an sich zu detektieren, sondern auch den Kurvenradius zu erfassen. In Abhängigkeit des erfassten Kurvenradius kann durch die aktiven Steuerungsmittel die Verlagerung des Innenkörpers relativ zu dem Gehäuse modifiziert werden. Bei dieser Ausgestaltung bestimmt die Steuerungseinrichtung anhand des durch den zweiten Sensor erfassten Wertes einen Sollwert für die Verlagerung der Hydrobuchse. Der erste Sensor erfasst wiederum die tatsächliche Verlagerung der Hydrobuchse, so dass in der Steuerungseinrichtung ein Abgleich des Sollwertes mit dem durch den ersten Sensor erfassten Istwert erfolgen kann. Prinzipiell ist dabei aber auch denkbar, dass die Funktion des zweiten Sensors durch den ersten Sensor übernommen wird, so dass der zweite Sensor entfallen kann.

Es ist auch denkbar, dass der zweite Sensor als GPS-Sensor, Kamera oder dergleichen ausgebildet ist. Darüber hinaus kann ein weiterer Sensor vorgesehen sein, welcher die Position des Innenkörpers relativ zu dem Gehäuse erfasst. Dies kann beispielsweise durch einen oder mehrere Hall-Sensoren erfolgen, die einer oder beiden Kammern zugeordnet sind und den Abstand zwischen Innenkörper und Gehäuse erfassen.

Die Einrichtung kann zumindest einen Kanal aufweisen, der die beiden Kammern hydraulisch miteinander verbindet, wobei die aktiven Steuerungsmittel den Transport von Hydraulikflüssigkeit über den Kanal in die Kammern beeinflussen. Dabei können die aktiven Steuerungsmittel der Einrichtung den Kanal in Richtung einer oder beider Kammern freigeben oder versperren.

Bei Anregung der Hydrobuchse verlagern sich das Gehäuse und der Innenkörper relativ zueinander, wodurch sich das Volumen der beiden Kammern verändert. Um diese Abweichung zu kompensieren, strömt Hydraulikflüssigkeit über den Kanal zwischen den beiden Kammern hin und her. In Abhängigkeit der Kanallänge und des Kanalquerschnitts erfolgt dabei auch eine Dämpfung, was wiederum mit einer Veränderung der Federungscharakteristik einhergeht. Dabei ist es prinzipiell auch denkbar, dass die aktiven Steuerungsmittel den Durchlassquerschnitt des Kanals beeinflussen, wodurch wiederum die Charakteristik der Hydrobuchse angepasst und insbesondere die frequenzabhängige Steifigkeit der Hydrobuchse modifiziert werden kann.

Die Einrichtung kann eine Drossel umfassen. Durch die Drossel wird der Volumenstrom der zwischen den beiden Kammern umströmenden Hydraulikflüssigkeit reduziert. Dadurch kann bei höherfrequenten Anregungen kein vollständiger Austausch der Hydraulikflüssigkeit zwischen den beiden Kammern erfolgen, so dass die Hydrobuchse eine harte Charakteristik aufweist. Bei geringen Anregungsfrequenzen hingegen kann über die Drossel Hydraulikflüssigkeit ausgetauscht werden, so dass die Hydrobuchse eine weiche Charakteristik aufweist. Die aktiven Steuerungsmittel können die Drosselwirkung der Drossel beeinflussen und so die Dämpfungseigenschaften der Drossel verändern.

Der Innenkörper kann einteilig ausgebildet sein. Dadurch ist der Innenkörper besonders kostengünstig herstellbar. Die Einrichtung kann dabei in den Innenkörper eingebrachte Bohrungen und stirnseitig eingebrachte Aufnahmen für die aktiven Steuerungsmittel umfassen.

Der Innenkörper kann einen ersten Verbindungsabschnitt und einen zweiten Verbindungsabschnitt aufweisen, wobei der erste Verbindungsabschnitt und der zweite Verbindungsabschnitt stirnseitig aneinander zur Anlage gelangen. Bei dieser Ausgestaltung ist der Innenkörper mehrteilig ausgebildet. Hierbei ist vorteilhaft, dass die Integration der Einrichtung, einschließlich der aktiven Steuerungsmittel, besonders einfach möglich ist und dass die Einrichtung eine komplexe Geometrie aufweisen kann.

Der Innenkörper kann ein Verbindungselement mit einer axialen Bohrung aufweisen, wobei der erste Verbindungsabschnitt und der zweite Verbindungsabschnitt zumindest teilweise in der Bohrung angeordnet sind. Dabei ist in der Bohrung vorzugsweise ein Gewinde eingebracht, und der erste Verbindungsabschnitt und der zweite Verbindungsabschnitt weisen außenumfangsseitig ebenfalls ein Gewinde auf. Zur Montage des Innenkörpers werden dann die beiden Verbindungsabschnitte in die Bohrung des Verbindungselementes eingeschraubt. Dadurch ist der Innenkörper einfach herstellbar und mechanisch robust.

Bei dieser Ausgestaltung ist auch denkbar, dass der erste Verbindungsabschnitt und der zweite Verbindungsabschnitt voneinander beabstandet sind, so dass sich zwischen Bohrung, erstem Verbindungsabschnitt und zweitem Verbindungsabschnitt ein Zwischenraum ergibt, in welchem die Einrichtung oder ein Teil der Einrichtung angeordnet sein kann. Bei dieser Ausgestaltung ist vorteilhaft, dass die Komponenten des Innenkörpers, also das Verbindungselement, der erste Verbindungsabschnitt und der zweite Verbindungsabschnitt, besonders einfach herstellbar sind.

Das Verbindungselement ist vorzugsweise ringförmig ausgebildet und ragt in den Raum zwischen Innenkörper und Gehäuse. Dabei ist vorteilhaft, dass das Verbindungselement das für die beiden Kammern zur Verfügung stehende Volumen verringert, was wiederum mit einer geringeren Menge Hydraulikflüssigkeit einhergeht. Die Hydraulikflüssigkeit verändert das Volumen in Abhängigkeit der Umgebungstemperatur. Durch das verringerte Volumen ergibt sich aber auch bei sehr starken Temperaturschwankungen nur eine geringe Volumendifferenz, so dass die Hydrobuchse auch bei starken Temperaturschwankungen vorbestimmte schwingungstechnische Eigenschaften aufweist.

In einer erfindungsgemäßen Verwendung fungiert die oben beschriebene Hydrobuchse als aktives hydraulisches Achslenkerlager. Dabei ist die Hydrobuchse vorzugsweise Teil eines Drehgestells eines Schienenfahrzeugs.

Aufgabe eines Achslenkerlager ist die Führung des Radsatzes eines Schienenfahrzeugs, wobei das Achslenkerlager während einer Kurvenfahrt Einstellbewegungen des Radsatzes zulässt. Dabei wird der Einstellwinkel der Achsen der Radsätze vorwiegend von der Längssteifigkeit des Achslenkerlagers bestimmt. Radial verstellbare Achsen ermöglichen einen verschleiß- und geräuscharmen Kurvenlauf. Daher soll das Achslenkerlager bei Kurvenfahrt eine niedrige Steifigkeit aufweisen. Zur Verbesserung eines ruhigen Laufs ist es vorteilhaft, wenn die Hydrobuchse eine hohe Steifigkeit bei größeren Anregungsfrequenzen aufweist.

Einige Ausgestaltungen der erfindungsgemäßen Hydrobuchse werden nachfolgend anhand der Figuren näher erläutert. Diese zeigen, jeweils schematisch:
Fig. 1 eine Hydrobuchse mit integrierter Einrichtung im Schnitt;
Fig. 2 eine Hydrobuchse mit mehrteiligem Innenkörper im Schnitt;
Fig. 3 eine Hydrobuchse mit teilweise integrierter Einrichtung im Schnitt.

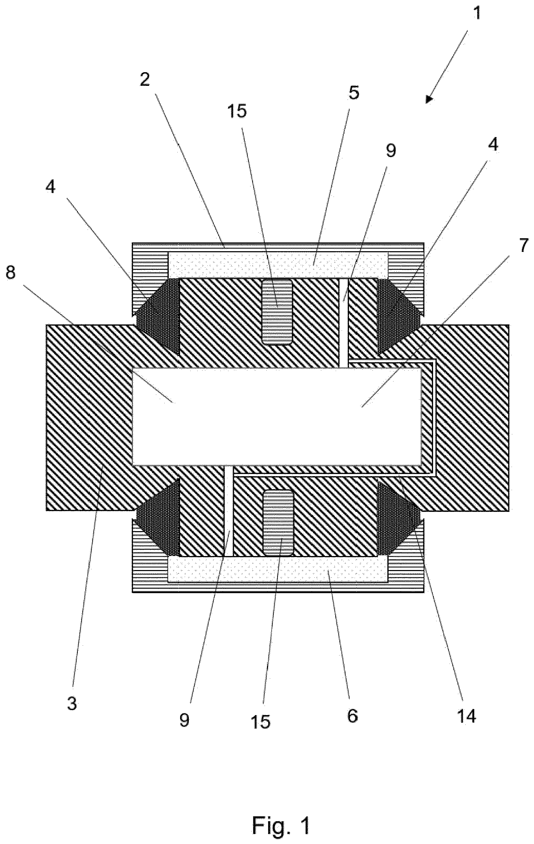

Figur 1 zeigt eine Hydrobuchse 1, umfassend ein hülsenförmiges Gehäuse 2, welches einen Innenkörper 3 mit radialem Abstand umgibt, wobei das Gehäuse 2 und der Innenkörper 3 über einen Federkörper 4 miteinander wirkverbunden sind. Das Gehäuse 2 und der Innenkörper 3 sind aus metallischem Werkstoff ausgebildet und der Federkörper 4 besteht aus elastomerem Werkstoff.

Der Federkörper 4 ist so ausgebildet, dass sich zwischen Gehäuse 2 und Innenkörper 3 zwei Kammern 5, 6 ausbilden, welche eine Hydraulikflüssigkeit aufnehmen. Die Kammern 5, 6 sind über eine Einrichtung 7 hydraulisch miteinander verbunden, wobei über die Einrichtung 7 eine Verlagerung von Hydraulikflüssigkeit zwischen den beiden Kammern 5, 6 erfolgen kann. Die Einrichtung 7 umfasst aktive Steuerungsmittel 8 in Form eines aktiv schaltbaren Ventils, wobei die aktiven Steuerungsmittel 8 auf einen Kanal 9 einwirken, wobei der Kanal 9 die beiden Kammern 5, 6 mit dem aktiven Steuerungsmittel 8 verbindet. Die aktiven Steuerungsmittel 8 beeinflussen die Verlagerung von Hydraulikflüssigkeit zwischen den beiden Kammern 5, 6 über die Einrichtung 7.

Die Einrichtung 7 umfasst ferner eine Steuerungseinrichtung, einen ersten Sensor 15 für die Erfassung einer Kurvenfahrt, eine Pumpe und einen Speicher. Die Pumpe ist ausgerüstet, Hydraulikflüssigkeit zu fördern. Der Speicher ist als Druckspeicher ausgebildet und zur Aufnahme von Hydraulikflüssigkeit ausgebildet. Das aktiv schaltbare Ventil ist als Proportionalventil ausgebildet und elektromagnetisch steuerbar. Die Ventilposition wird durch die Steuerungseinrichtung vorgegeben. Der Sensor für die Erfassung einer Kurvenfahrt ist bei der vorliegenden Ausgestaltung in die Hydrobuchse 1 integriert und erfasst die Position des Innenkörpers 3 relativ zu dem Gehäuse 2. Dementsprechend ist der Sensor 15 als Wegesensor ausgebildet, wobei der Sensor der vorliegenden Ausgestaltung ein induktives Wirkprinzip aufweist. Alternativ kann der Sensor als Hall-Sensor ausgebildet sein, der einer Kammer 5 zugeordnet ist und der den Abstand zwischen Innenkörper 3 und Gehäuse 2 erfasst. Bei der vorliegenden Ausgestaltung ist jeder Kammer 5, 6 ein Sensor 15 zugeordnet ist. Alternativ ist aber auch denkbar, die Hydrobuchse 1 mit nur einem einzigen Sensor 15 auszurüsten.

In einer ersten Position, vorliegend der Mittelposition, erfolgt keine Förderung von Hydraulikflüssigkeit über Speicher und/oder Fördereinrichtung in eine der beiden Kammern 5, 6. In dieser Position sind die beiden Kammern 5, 6 über den Kanal 9 strömungsleitend verbunden und Hydraulikflüssigkeit kann über den Kanal 9 zwischen den beiden Kammern 5, 6 strömen. Dadurch kann sich der Innenkörper 3 passiv zu dem Gehäuse 2 verlagern.

Detektiert der Sensor 15, dass eine Kurvenfahrt des Drehgestells erfolgt, veranlasst die Steuerungseinrichtung je nach erfasster Kurvenrichtung einen Schaltvorgang des Ventils in Richtung einer zweiten oder einen dritten Position. Bei diesen Positionen wird durch den Speicher und/oder die Pumpe Hydraulikflüssigkeit in die erste Kammer 5 oder die zweite Kammer 6 gefördert und aus der jeweils anderen Kammer kann Hydraulikflüssigkeit abströmen. Dadurch verlagert sich der Innenkörper 3 aktiv zu dem Gehäuse 1 und die Hydrobuchse 1 wirkt der Kurvenfahrt verschleißmindernd entgegen.

Bei der in Figur 1 gezeigten Ausgestaltung sind die aktiven Steuerungsmittel 8 und der Sensor in den Innenkörper 3 aufgenommen, die Fördereinrichtung, der Speicher und die Steuerungseinrichtung sind hingegen außerhalb der Hydrobuchse 1 angeordnet. Der Innenkörper 3 ist einteilig ausgebildet.

Der Kanal 9 weist einen ersten Abschnitt auf, der die erste Kammer 5 mit der Einrichtung 7 verbindet. Ein zweiter Abschnitt des Kanals 9 verbindet die zweite Kammer 6 mit der Einrichtung. Die Hydrobuchse 1 weist ferner einen Bypass-Kanal 14 auf. Der Bypass-Kanal 14 verbindet den ersten Abschnitt und den zweiten Abschnitt des Kanals 9 strömungsleitend miteinander, so dass die Kammern 5, 6 über den Bypass-Kanal 14 direkt miteinander verbunden sind. Der Bypass-Kanal 14 weist einen deutlich geringeren Querschnitt auf als der Kanal 9 und wird durch keinerlei Steuerungsmittel beeinflusst. Der Bypass-Kanal 14 ist ein passiv wirksamer Kanal und bildet eine Fail-Safe-Einrichtung, indem er einen allmählichen Austausch von Hydraulikflüssigkeit zwischen den beiden Kammern 5, 6 insbesondere dann ermöglicht, wenn die aktiven Steuerungsmittel 8 aufgrund einer Störung nicht schalten.

Die Hydrobuchse 1 mit Einrichtung 7 gelangt in einem Achslenkerlager in einem Drehgestell eines Schienenfahrzeugs zum Einsatz.

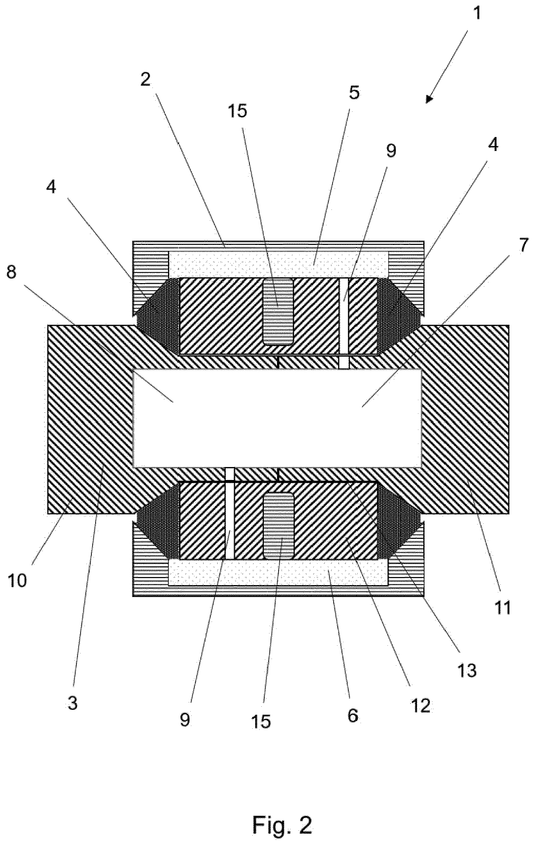

Figur 2 zeigt eine Hydrobuchse 1 gemäß Figur 1, wobei bei der in Figur 2 gezeigten Ausgestaltung der Innenkörper 3 mehrteilig ausgebildet ist. Der Innenkörper 3 weist einen ersten Verbindungsabschnitt 10 und einen zweiten Verbindungsabschnitt 11 auf, wobei der erste Verbindungsabschnitt 10 und der zweite Verbindungsabschnitt 11 jeweils stirnseitig aus dem Gehäuse 2 hervorstehen. Der erste Verbindungsabschnitt 10 und der zweite Verbindungsabschnitt 11 gelangen stirnseitig aneinander zu Anlage. Der Innenkörper 3 weist ferner ein Verbindungselement 12 mit einer axialen Bohrung 13 auf, wobei der erste Verbindungabschnitt 10 und der zweite Verbindungsabschnitt 11 teilweise in der Bohrung 13 angeordnet sind. Die Bohrung 13 weist ein Innengewinde auf. Der erste Verbindungabschnitt 10 und der zweite Verbindungsabschnitt 11 sind zumindest in dem Kontaktabschnitt mit dem Verbindungselement 12 zylindrisch ausgebildet und mit einer außenumfangsseitigen Gewindegeometrie versehen. Der erste Verbindungsabschnitt 10 und der zweite Verbindungsabschnitt 11 sind bei dieser Ausgestaltung in das Verbindungselement 12 eingeschraubt.

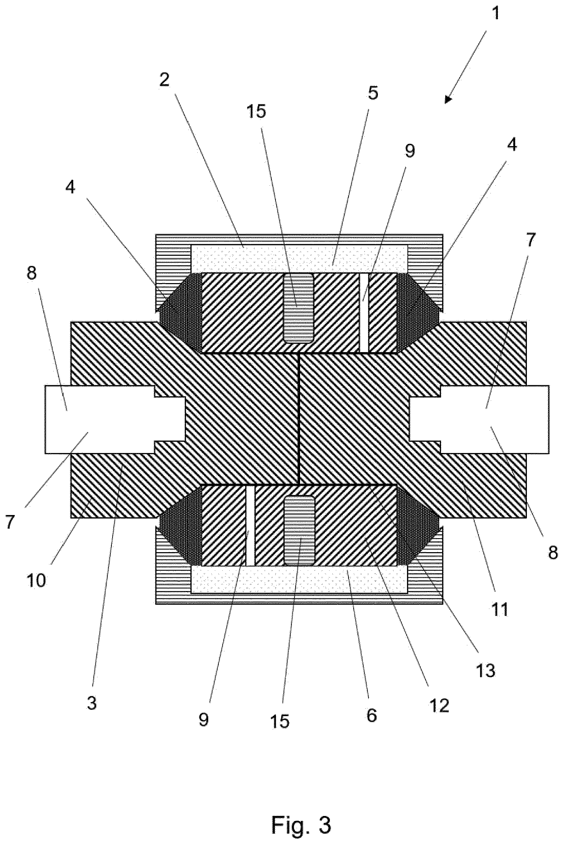

Bei der in Figur 3 beschriebenen Hydrobuchse 1 sind die aktiven Steuerungsmittel 8 in Form der Ventile lediglich teilweise in den Innenkörper 3 integriert. Die aktiven Steuerungsmittel 8 ragen jeweils stirnseitig aus dem ersten Verbindungsabschnitt 10 und dem zweiten Verbindungsabschnitt 11 aus der Hydrobuchse 1 heraus. Im Übrigen umfasst die Hydrobuchse 1 gemäß Figur 3 die Merkmale der in Figur 1 oder in Figur 2 beschriebenen Hydrobuchse 1.

## Patentansprüche

1. Hydrobuchse (1), umfassend ein hülsenförmiges Gehäuse (2), welches einen Innenkörper (3) mit radialem Abstand umgibt, wobei das Gehäuse (2) und der Innenkörper (3) über einen Federkörper (4) miteinander wirkverbunden sind, wobei der Federköper (4) so ausgebildet ist, dass sich zwischen Gehäuse (2) und Innenkörper (3) zwei Kammern (5, 6) ausbilden, welche eine Hydraulikflüssigkeit aufnehmen, wobei die Kammern (5, 6) über zumindest eine Einrichtung (7) hydraulisch miteinander verbunden sind, wobei die Einrichtung (7) aktive Steuerungsmittel (8) umfasst, **dadurch gekennzeichnet, dass** die Einrichtung (7) zumindest teilweise in den Innenkörper (3) aufgenommen ist.

2. Hydrobuchse nach Anspruch 1, **dadurch gekennzeichnet, dass** die Einrichtung (7) eine aktive Verlagerung des Innenkörpers (3) relativ zu dem Gehäuse (2) bewirkt.

3. Hydrobuchse nach Anspruch 1 oder 2, **dadurch gekennzeichnet, dass** die Einrichtung (7) zumindest einen Kanal (9) aufweist, der die beiden Kammern (5, 6) hydraulisch miteinander verbindet.

4. Hydrobuchse nach einem der Ansprüche 1 bis 3, **dadurch gekennzeichnet, dass** die aktiven Steuerungsmittel (8) als Ventil ausgebildet sind.

5. Hydrobuchse nach Anspruch 4, **dadurch gekennzeichnet, dass** die aktiven Steuerungsmittel (8) auf den Kanal (9) einwirken.

6. Hydrobuchse nach einem der Ansprüche 1 bis 5, **dadurch gekennzeichnet, dass** die als Ventil ausgebildeten aktiven Steuerungsmittel (8) in dem Innenkörper (3) aufgenommen sind.

7. Hydrobuchse, nach einem der Ansprüche 1 bis 6, **dadurch gekennzeichnet, dass** zumindest ein Sensor für die Erfassung einer Kurvenfahrt vorgesehen ist.

8. Hydrobuchse, nach Anspruch 7, **dadurch gekennzeichnet, dass** zumindest ein erster Sensor dem Gehäuse (2) und/oder dem Innenkörper (3) zugeordnet ist.

9. Hydrobuchse nach einem der Ansprüche 1 bis 8, **dadurch gekennzeichnet, dass** der Innenkörper (3) einteilig ausgebildet ist.

10. Hydrobuchse nach einem der Ansprüche 1 bis 8, **dadurch gekennzeichnet, dass** der Innenkörper (3) einen ersten Verbindungsabschnitt (10) und einen zweiten Verbindungsabschnitt (11) aufweist, wobei der erste Verbindungsabschnitt (10) und der zweite Verbindungsabschnitt (11) stirnseitig aneinander zur Anlage gelangen.

11. Hydrobuchse nach Anspruch 10, **dadurch gekennzeichnet, dass** der Innenkörper (3) ein Verbindungselement (12) mit einer axialen Bohrung (13) aufweist, wobei der erste Verbindungsabschnitt (10) und der zweite Verbindungsabschnitt (11) zumindest teilweise in der Bohrung (13) angeordnet sind.

12. Hydrobuchse nach einem der Ansprüche 1 bis 11, **dadurch gekennzeichnet, dass** die beiden Kammern (5, 6) über einen Bypass-Kanal (14) strömungsleitend miteinander verbunden sind.

13. Verwendung der Hydrobuchse (1) nach einem der vorherigen Ansprüche als Achslenkerlager.

14. Verwendung der Hydrobuchse (1) nach einem der vorherigen Ansprüche in einem Drehgestell eines Schienenfahrzeugs.
